# EUROPEAN PATENT APPLICATION

(11) **EP 3 866 056 A1**
(43) Date of publication of application: **18.08.2021**
(21) Application number: 20382117.8
(22) Date of filing: 17.02.2020
(51) Int. Cl.: G06K 9/00, G06K 9/62, G06T 7/246

(54) **METHOD, SYSTEM AND COMPUTER PROGRAMS FOR TRACEABILITY OF LIVING SPECIMENS**

(71) Applicant: Touchless Animal Metrics, SL, 08010 Barcelona (ES)
(72) Inventor: AMAT ROLDAN, Ivan, 08024 Barcelona (ES)
(74) Representative: Juncosa Miró, Jaime

(57) **Abstract**

A method, system and computer programs for traceability of living specimens are provided. The method comprises executing a first process that performs video tracking of a plurality of living specimens and that determines tracking features thereof; determining a trajectory vector that includes a trajectory followed by each detected living specimen; executing a second process at a certain period of time that determines secondary features of one or more living specimens; matching tracking features of the trajectory vector with the secondary features, providing reference point of hyperfeatures; determining secondary features of the living specimens for other periods of time, providing other reference points of hyperfeatures; identifying when two reference points are contained within a same digital identifier, and as a result providing a potential trajectory segment; comparing physical characteristics of said potential trajectory segment and establish that the potential trajectory segment is valid/invalid depending if said comparison is inside/outside a given range.

## Description

### Technical Field

The present invention relates to a method, system and computer programs for traceability of living specimens, in particular animals such as pigs, cows, chickens, bulls, etc.

### Background of the Invention

Currently, most livestock is unidentified and production efficiency is obtained in statistical terms. In the recent years, precision livestock farming has emerged as a different approach to control at individual level livestock.

Individual identification of livestock is one of the key elements to successfully bring precision farming to farms. There are known some existing approaches in this field, such as the use of RFID, which is based on an electronic tag place on the animal or livestock that is read by radio frequency; face recognition techniques, which are based on detecting face features of the animal/livestock and processing them with artificial intelligence techniques; and video tracking techniques that use computer vision algorithms to track the animals/livestock from a camera.

There are also known some patent or patent applications in this field which are based on the previous approaches. For example, the US patent application US2019133087A1 relates to a management apparatus that includes a control unit that extracts, on the basis of first information that is generated by a sensor device worn by an individual and is related to a living body of the individual, a specific individual satisfying a predetermined condition, and generates, on the basis of position information related to a position of the specific individual, search information for causing a mobile object to move to the position of the specific individual.

US patent application US2011298619A1 discloses an animal monitoring system comprising at least one tag attachable to an animal, a real time location system (RTLS) for determining the three dimensional position of said at least one tag within a monitoring zone, orientation determining means for determining the orientation of said at least one tag, and discriminating means for discriminating between different activities of the at least one animal based upon the location and orientation of the animal's tag within the monitoring zone.

Chinese patent application CN108363990A on another hand discloses a pig face identification system and method. The system comprises a camera module, a front end application module and a back end identification module, wherein the camera module is used for obtaining image information of a pig face and transmitting the information to the front end application module; the front end application module comprises a pig face taking module used for identifying pig face information, and generating an effective picture containing the pig face according to the image information; the back end identification module comprises a pig face identification module used for generating an effective picture of the pig face according to the pig face taking module, it is determined whether a pig is a new pig or an existing pig through comparison, if the pig is a new pig, a globally unique pig identity ID is generated, and if the pig is an existing pig, the pig identity ID is identified. The pig face identification system can well take the place of an electronic ear tag or ear card used in existing pig generation management, thereby solving the defect problem of using the electronic ear tag or ear card.

Apart from that, video tracking is a well-known technique commonly used in video surveillance applications. Some proposals are also known by CN103488148A, US2014300758A1, and US2019138801A1 (which is based in 3D cameras).

Main limitations of the above implementations are based on two factors: cost and accuracy. RFID costs about 0.30$ per animal and has precision of 100%, however there is no clear advantage for identifying animals at individual level today. Face recognition is about 7$ per animal and its accuracy is not fully validated, so it is at development level. There is no stable video tracking solution in farms and is currently under development, some commercial costs seem to be even higher than face recognition and its accuracy is not fully validated.

Technological issues for face recognition and video tracking arise from processing capabilities and inefficient algorithms that require large computer facilities to process even a single pen with more than a half million images per day, about 50 million images per fattening period for a single pen.

New methods and systems for optimal management of living specimens including automated correction of identification of video tracking, i.e. traceability, are therefore needed.

### Description of the Invention

To that end the present invention proposes, according to a first aspect, a method for traceability of living specimens such as an animal/livestock (for example a pig, a cow, a broiler, a chicken or a bull, among others). The method is mainly based in the use of a primary system that performs video tracking of the living specimens and a secondary system that provides animal features to validate or recover identity of at least one of said living specimens.

Hence, according to an embodiment of the present invention, the method comprises:
a) executing a first process that performs video tracking of a plurality of living specimens, wherein the first process comprises:
   a1) continuously acquiring, by a primary system including at least one static camera, video images of the living specimens and transmitting the acquired video images to a processing unit;
   a2) detecting, by the processing unit, for each received video image, the living specimens included therein by comparing each received video image with at least one past video image, the latter being stored in a database of video tracking images; and
   a3) determining, by the processing unit, for each received video image, tracking features of the detected living specimens by implementing a tracking algorithm on the video image, the tracking features including a digital identifier of each detected living specimen, a time stamp, and at least one of the following features: a position or a contour of the detected living specimens;
b) determining, by the processing unit, a trajectory vector that includes a trajectory followed by each detected living specimen according to its digital identifier, said trajectory vector being determined by accumulating all the tracking features determined in step a3;
c) executing a second process at a certain period of time, wherein the second process comprises:
   c1) acquiring, by a secondary system, data of at least one living specimen of said plurality of living specimens, wherein the secondary system is placed at a known position when acquiring said data;
   c2) determining, by the secondary system, at least one physical characteristic of said at least one living specimen based on the acquired data; and
   c3) determining, by the secondary system, secondary features of the at least one living specimen, said secondary features including the determined at least one physical characteristic, a timestamp and said position;
d) upon reception of at least one determined secondary feature fulfilling a given score, matching, by a processing unit, the time stamps and positions or contours of the tracking features included in said trajectory vector with the timestamp and position of the received secondary feature, a result of said matching providing a reference point of hyperfeatures that links physical characteristics of the at least one living specimen of step c1) with a digital identifier;
e) repeating steps c) and d) for other periods of time and as a result providing other reference points of hyperfeatures that link physical characteristics of the living specimens with a digital identifier;
f) identifying, by a processing unit, when two reference points are contained within the same digital identifier, and as a result providing a potential trajectory segment; and
g) comparing, by a processing unit, the physical characteristics of said potential trajectory segment, wherein:
   g1) if a result of said comparison is comprised inside a given range, the potential trajectory segment is established as a valid trajectory segment; or
   g2) if a result of said comparison is comprised outside the given range, the potential trajectory segment is established as an invalid trajectory segment.

It should be noted that the processing units executing each of the above-described steps can be the same unit or can be independent processing units. The processing units can be part of a computer or a server or even a cloud server.

In an embodiment, step g2) also includes establishing that additional actions has to be done, for example that step c2) has to be repeated in order to determine other physical characteristics of the living specimens or that steps d) - f) have to be repeated to obtain an alternative potential trajectory segment.

Moreover, step g2 may also include:
- calculating two time points linked by possible trajectories that initially belonged to different digital identities;
- establishing a likelihood of two potential trajectory segments by comparing additional features of two time points; and/or
- calculating most likely segments of trajectories and reliability of such segment of trajectory by computing a global and local maximization of likelihood.

In a particular embodiment, the data acquired in step c1) is at least one image of the living specimen(s). In case the acquired image contains a plurality of living specimens, step c) may also comprise applying a homography algorithm to differentiate the living specimens that are very close together, for example one in front of another or even one on top of another.

According to said particular embodiment, the physical characteristic determined in step c2) can be a body map (or body model) of the at least one living specimen (i.e. a one, two or multi-dimensional representation or graph of the living specimen in which different information thereof can be linked, for example body size of the living specimen, orientation, etc.); a body temperature of the at least one living specimen, a body temperature of a given body part of the at least one living specimen, the weight, the spectral response, the electromagnetic response, a colorimetry and/or a texture of the at least one living specimen.

In another embodiment, the physical characteristic determined in step c2) can be the weight, the bioimpedance, spectral response or a pattern of steps of the living specimen.

Identification of animals is a technically difficult problem and it provides important information related to behavior, welfare and traceability of living specimens. Present invention by combining video tracking and disambiguation of identity will also enable to individually quantify amount of walked meters of each animal in a pen, amount of standing time of each animal, association of secondary features and physical characteristics to an individual animal for storing longitudinal characterization of its growth or life, and also it will enable its analysis. These tagged measurements that are technically unfeasible by means of human operators will enable accurate description of animal development to ensure welfare, detect anomalous health status or behavior (aggressiveness, stressed, too static...) with complete traceability and reliable identity. Temporal analysis of trajectories or secondary features or sensors will enable to anticipate actions of farmers and optimize productivity.

For example, health status of an animal can be conditioned by the amount of meters per day an animal walks. This can be directly calculated as the total path walked along one day in one trajectory and additional constraints like age and weight can set different boundaries for healthy and unhealthy. Also, a sick or stressed animal can be detected when an animal is located in the same position for a long period of time. Hence, complementary information can be obtained from secondary system by estimating animal posture or body temperature in recent measurements. Furthermore, before sending a warning to the farmer present invention can require another machine/instrument to attempt measuring body temperature and/or body posture.

In another example, animal welfare might be calculated as the number of interactions among animals per day. Interactions can be estimated as the number of trajectory crossings, trajectories at a certain distance or boundaries of animals in contact or nearby in the same frame. An animal with abnormally high contacts might be stressed by other animals, and if this animal is standing in a specific location this is highly likely. Under this situation, an animal that stays in a single position and receives multiple interactions would require sending a warning to the farmer so she/he can take action and ensure animal welfare.

Reliable positioning and identification of animals will also enable accurate computation of spatial effects in a farm, like air quality, temperature changes inside the barn, leaks, fungus among others to estimate animal welfare and health. Also, it can cooperate with other sensors to correlate motion (instantaneous walking) and heart rate, digestion or metabolism.

For example, if it is winter and there is a hole in the barn by which cold air enters the barn, animals closer to the hole might be more likely to have a health problem in the following days. Temperature measurements can help calculating the time when the hole occurred and trajectories can enable to estimate the amount of cold every animal was exposed.

Another example would be to relate information from water flow meters with trajectories to establish when an animal was effectively drinking in a barn. This can help to better estimate the amount of water and feed intake in commercial barns at individual level.

Present invention also proposes, according to another aspect, a system for traceability of living specimens. The system particularly comprises a primary system including at least one static camera; a secondary system including a data acquisition unit and at least one processing module; at least one processing unit; and a database of video tracking images. The system is configured to implement the method of the first aspect of the invention.

In an embodiment, the data acquisition unit is an image acquisition unit including at least one camera such as RGB camera with extended NIR in the red channel or a thermal camera.

In an embodiment, the secondary system also includes a telemetric unit. In this case, the image acquisition unit and the telemetric unit are calibrated. The telemetric unit may be a rotating Lidar, a scanning Lidar, a plurality of Lidars, a time-of-flight (TOF) sensor or a TOF camera, combinations thereof, among others.

In another embodiment, the secondary system is a scaling system. In other embodiments, the secondary system may be a floor with piezo electric material to record steps, a mechanism to record bioimpedance on a part of the floor, a RFID reader or an antenna to read a wearable chip, a device to record heart rate, etc.

In yet another embodiment, the system may also include one or more additional sensors to evaluate different parameters of the farm and/or of the living specimen(s) such as air quality, ventilation, temperature, humidity, water intake, feed intake, metabolism, digestion and/or heart rate.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

### Brief Description of the Drawings

The previous and other advantages and features will be more fully understood from the following detailed description of embodiments, with reference to the attached figures, which must be considered in an illustrative and non-limiting manner, in which:
Fig. 1 is a flow chart illustrating a general overview of the proposed method for traceability of living specimens.
Fig. 2 is another flow chart detailing some of the steps executed by the method of Fig. 1, according to an embodiment of the present invention.
Figs. 3-6 graphically illustrate a particular embodiment of the present invention for traceability of pigs.

### Detailed Description of Preferred Embodiments

Present invention provides a method and corresponding system for traceability of living specimens, in particular livestock such as pigs, broilers, chickens, bulls, etc. in order to improve the optimal management of the livestock.

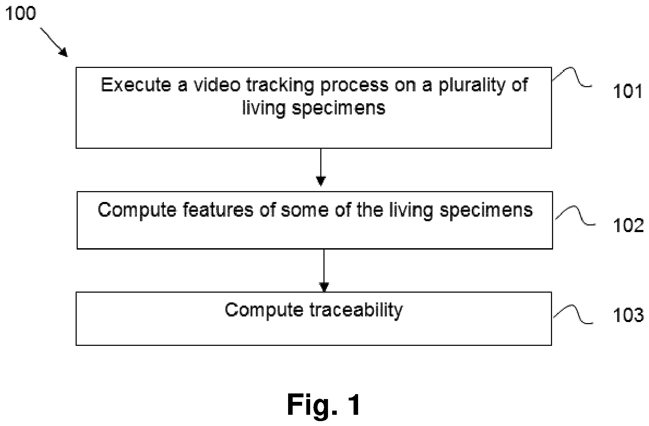

With reference to Fig. 1, therein it is illustrated an embodiment of the proposed method. In this particular embodiment, the method 100 comprises executing (step 101), by a video tracking system, or primary system as referred in the claims, including one or more cameras, a video tracking process on the living specimens; computing/providing (step 102), by a secondary system, features of the living specimens to validate or recover identity thereof; and computing (step 103), by one or more processing units, the traceability of the living specimens.

In the proposed system, the camera(s) of the video tracking system is/are installed/placed in a farm, each camera having its field of view oriented towards a given part of the farm. Moreover, a processing unit receives images or video stream of any camera and performs tracking operations, meaning obtaining position or contour of every living specimen in the field of view in relationship with past images. Therefore, each camera is in a static position and control a specific zone. This provides continuous measurements or almost-continuous measurements of all living specimens that are tracked. This enables to track with milliseconds or second's precision the position and identity of a number of living specimens.

Besides, the secondary system provides unavailable information to the video tracking system and allows for checking, validation or recovery of animal identification. This importantly eliminates the need for human intervention for correcting tracking or digital identification (digital tag). Another fundamental characteristic of the secondary system is that this unique information is not continuously available and is rather and intermittent flow of data. This is a strong difference compared to video tracking system as it is always registering data and its key characteristic is that it never stops. In summary, the secondary system is in charge of acquiring secondary and intermittent animal features to correct and ensure accurate animal tracking at individual level.

The intermittent nature of the secondary system can be produced by a number of reasons: (1) it is a movable system so it generates measurements only when a living specimen is nearby; (2) it is a fix system but the living specimen interacts from time to time with it so measurements are also intermittent. Intermittent or non-continuous measurements also include bursts of measurements as measurements are available for an interval of time because the living specimen and the secondary system are nearby or in contact, what results in intermittent intervals of continuous measurements. In case that the video tracking system makes a mistake or processing is stopped due to a contingency such as an electric cut, the secondary system will be able to recover animal identities later in time. Depending on the amount of time of recovery additional processing based on predictive models of secondary features and max likelihood matching will be needed.

According to the invention, the secondary system includes a data acquisition unit and one or more processing modules. For example, in some embodiments, the data acquisition unit is a camera such as a RGB camera or a thermal camera. In this case the secondary system may also include a telemetric unit allowing measuring the distance to several parts of the living specimen. The telemetric unit can be implemented as a Lidar element or as a TOF element, among others.

Alternatively, in other embodiments, the secondary system is a scaling system. In this case the scaling system may comprise a communication module to transmit the acquired data to the processing unit.

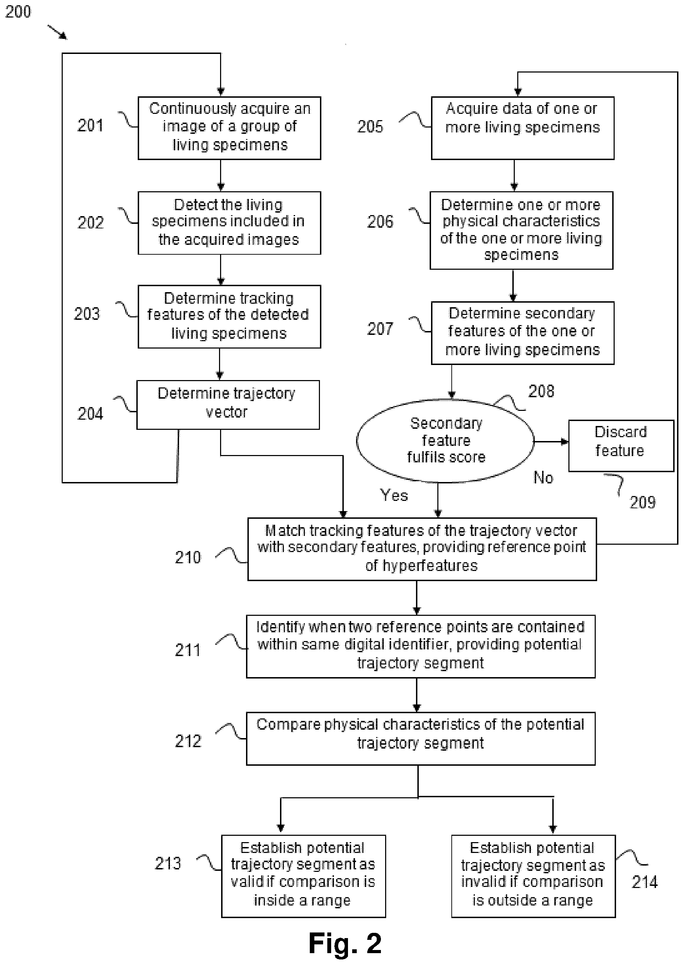

With reference to Fig. 2, therein it is illustrated a more detailed embodiment of the proposed method. According to this embodiment, at step 201, the video tracking system via one or more cameras continuously acquires one or more images of a group of living specimens, or livestock. At step 202, once the processing unit has received the acquired images, the processing unit detects the livestock included in each of the acquired images. To do so the processing unit compares each received image with past livestock images stored in a database of video tracking images. At step 203, the processing unit determines tracking features of the detected livestock (i.e. the processing unit determines a digital identifier of each animal, a time stamp and the position or contour of the animal). Once the tracking features of the detected livestock are determined, at step 204, the processing unit, determines a trajectory vector of each detected livestock.

At step 205, the secondary system starts executing the second process to compute features of the livestock to validate or recover identity thereof. To that end, once the data of one or more livestock is acquired by the secondary system (step 205) the secondary system determines (step 206) one or more physical characteristics of such livestock using the acquired data. Then, at step 207, the secondary system determines secondary features of the livestock, including the previously calculated physical characteristics, a timestamp and the position of the livestock. At that moment, two situations may occur. If the determined secondary features do not fulfil a given score (step 209) such features are discarded, i.e. the features are not correct or don't have enough quality and cannot be used for further processing. Alternatively, at step 210, if the features do fulfil the given score, the processing unit matches the time stamps and positions or contours of the tracking features included in the trajectory vector with the timestamp and position of the secondary features and as a result of said matching the processing unit provides a reference point of hyperfeatures that links physical characteristics of the livestock with a digital identifier.

As previously indicated, secondary features may be obtained intermittently, and in average every period of time, for example every 10 min, 30 min, 45 min, 1 hour, 5 hours, 12 hours, 24 hours, days or weeks, among others. Hence, previous steps 205-210 are repeated according to said configured period of times. However, as living specimens show an uncertainty in behavior these secondary features have some stochastic nature. For example, it is possible to obtain 10 sets of secondary features in less than 5 seconds, and do not have any more information about this living specimen until next day or next week.

It should be also noted that at some point steps 201 and 205 can be executed at same time or in close periods of time.

Referring back to Fig. 2, at step 211, the processing unit identifies when two reference points are contained within the same digital identifier and as a result provides a potential trajectory segment. At that time, step 212, the processing unit compares the physical characteristics of said potential trajectory segment, wherein if a result of said comparison is comprised inside a given range (step 213) the potential trajectory segment is established as a valid trajectory segment; on the other hand, if a result of said comparison is comprised outside the given range (step 214), the potential trajectory segment is established as an invalid trajectory segment.

The physical characteristic(s) determined in step 206 vary depending on the type of secondary system used by the present invention. In an embodiment, and for the particular case of the secondary system including a camera and a processing module the physical characteristic(s) may include a body map of the livestock; a body temperature of the livestock, a body temperature of a given body part of the livestock, the weight of the livestock, the spectral response of the livestock, the electromagnetic response of the livestock, or even a colorimetry or texture parameter of the livestock. In another embodiment, and for the particular case of the secondary system being a scaling system, the physical characteristic(s) may include the weight of the livestock, the bioimpedance of the livestock and/or a pattern of steps of the livestock.

Following a particular embodiment for performing traceability of pigs is detailed.

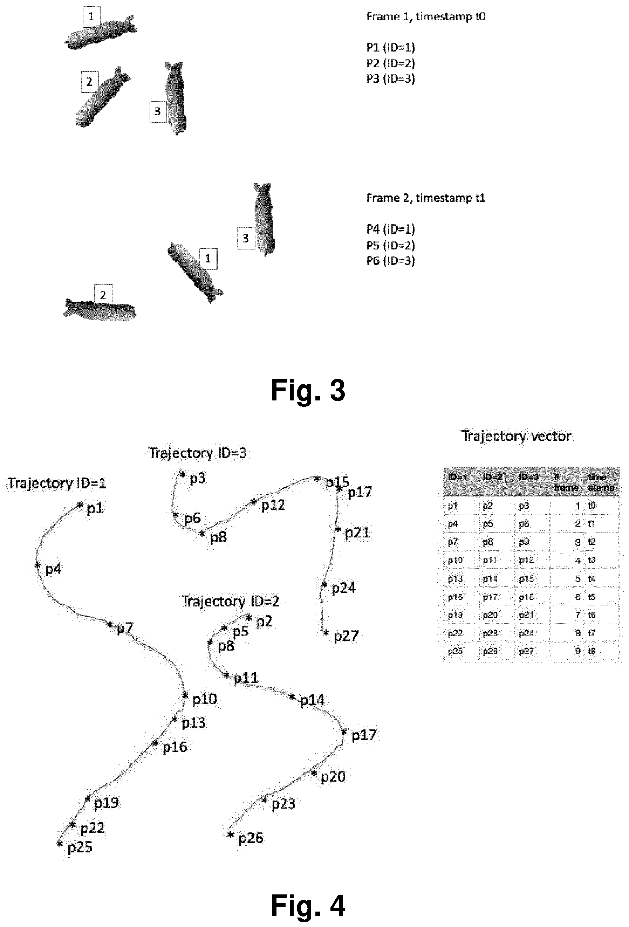

Fig. 3 illustrates an example of the video tracking process (step a) in which the pigs are labeled according to a digital identifier and followed in the next frame, whereas Fig. 4 illustrates step b) in which each position and digital identifier are accumulated in a trajectory vector that contains multiple identities and positions. This would be similar to the standard output of a video tracking system. However, as these systems are known to have low reliability in the livestock context, the present invention reports an approach for automated revision and re-allocation of identities and trajectories.

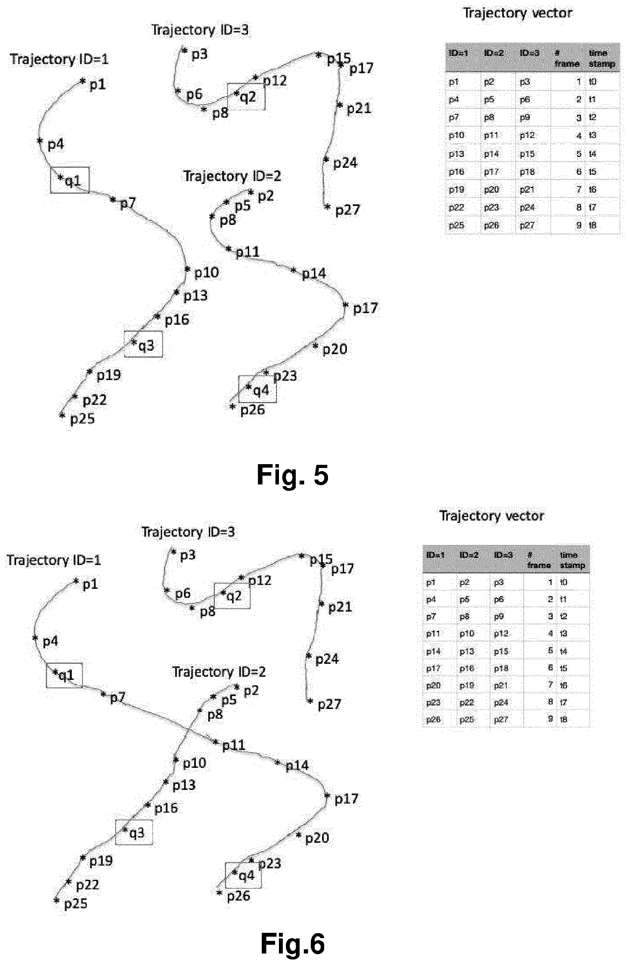

Fig. 5 shows a possible sampling of secondary features, qk, that are linked to specific trajectories by linking position and time. In the context of Fig. 5, present invention obtains a trajectory vector that contains three digital identities from steps a) and b) and four sampling times for secondary features: q1, q2, q3 and q4 from step c). As trajectory vector and secondary features contain position and time information it is possible to link trajectory ID to secondary features by step d). By repeating all steps, it is possible to accumulate enough data as shown in Fig. 5. Along this process of accumulation of data, steps f) and g) become critical as they enable to validate trajectories and identities.

At time t0, only three positions that have an arbitrary digital identity are had. As time progresses, at time t2, a set of secondary features q1 is collected at some moment between t1 and t2. This q1 is assigned to trajectory ID=1 by means of time and position. Similarly, q2 is acquired between t2 and t3, and assigned to trajectory ID=2. As q1 and q2 are not contained within the same trajectory ID there are no further operations. Before time t6 occurs a new set of secondary features is acquired, q3, which is assigned to trajectory ID=1. As q1 and q3 belong to the same trajectory ID=1 a comparison calculation is done. This can be accomplished by means of similarity, distance, difference or likelihood. For example, if secondary features qk are defined as weight it is possible to calculate the absolute difference of q1 and q3. For short periods of time, expected difference between q1 and q3 is expected to be small, within the error of the measurement, maybe with some additional tolerance. However, if period of time between q1 and q3 is long, different body changes are possible, for example: water drinking, eating, diarrhea, or even growth. For such periods of time a more complex calculation might be considered, for example, a linear or polynomial growth model, or even an empirical growth curve expected for the animal.

According to the invention, it is also possible to use other variables as secondary features such as anatomical lengths, areas, volumes, or characteristics derived from them, for example, length and width of the ham, curvature of the ham, length and curvature of the girth, among many others. Euclidean, city block, or other distance measurements can be performed and establish a maximum deviation distance as a whole or per body part. Also, body maps acquired at different time points (i.e. q1 and q3) can be compared by overlapping multiple anatomical landmarks to evaluate similarity of body or body parts.

Before time t8 occurs a new set of secondary features is acquired, q4, which is assigned to trajectory ID=2. In this context of acquisitions shown in Fig. 5, several scenarios are possible.

For instance, in a first scenario, the system would simply confirm that the trajectory vector is correct (step g1). The process could be as follows. Before time t6 secondary features q3 are acquired. As q1 and q3 belong to trajectory with ID=1, the system can decide to immediately compare both secondary sets. By means of any comparison approach (below there are reported examples of different comparison approaches) it can be established that the difference is between accepted limits and identity is confirmed. The system might assign a reliability score for this segment as a result of the comparison used for later use depending on configuration.

In a second scenario, the system might see that trajectory vector is not correct (step g2). The process could be as follows. Before time t6 secondary features q3 are acquired. As q1 and q3 belong to trajectory with ID=1, the system can decide to immediately compare both secondary sets. Using any comparison approach it may be established that the difference is not acceptable. Therefore, the system can decide to wait for more data by repeating steps c) to f) until a new step g) is computed again between at least another qk. It is possible to assign a reliability score for this segment defined between q1 and q3 as a result of the comparison used for later use depending on configuration (i.e. future comparisons). As steps c) to f) are continuously executed, eventually a new set of secondary features will be received. In the described example of Fig. 5 before time t₈ occurs, a new set of secondary features is acquired, q4, and trajectory ID=1 and ID=2 are close for a period of time, then it is possible that the identity crossing occurred in video tracking process (step a). The system then compares q1 with q4 and may decide that the difference is acceptable and identities were crossed by video tracking (step a). The system then changes trajectory vector accordingly for the most likely trajectory as shown in Fig. 6.

In a third scenario, the system can loop more than once from step g2 and repeat steps c) to d) also. Therefore, in this third scenario the system can conclude that the trajectory vector cannot be resolved and needs more data (step g2) as occurred in second scenario and steps c) to f) are repeated until a new step g) is computed again between at least another qk. The process could be as follows. Before time t₆ secondary features q3 are acquired. As q1 and q3 belong to trajectory with ID=1, the system can decide to immediately compare both secondary sets. Using any comparison approach it can be established that the difference is not acceptable, and so the system can decide to wait for more data and might assign a reliability score for this segment as a result of the comparison used for later use depending on configuration. Before time t₈ occurs a new set of secondary features is acquired, q4, and trajectory ID=1 and ID=2 are close for a period of time. Then it is possible and identity crossing. In contrast to second scenario, the system can then compare q1 with q4 and might decide that difference is not acceptable one more time (step g2, again) and that the identities are still unclear. So, the system can decide to wait for more data and might assign a reliability score for this segment to be used later.

The above can be iterated/repeated many times and at some point in time there might be a number of ambiguities or even when all data has been collected there might be a number of ambiguities. In this case, another method might be used to find the most likely set of trajectories in global terms, by means of optimization strategies (i.e. analytical, iterative, data driven, minimization of error, Powell, LMS,...), also it might be possible to ask a user or operator to validate few critical points to confirm or reject some trajectory segments to disambiguate some points based on images and data.

It should be noted that these strategies are applied to link secondary features and trajectory identities by comparing many time points independently of existing a trajectory crossing or not. For example, a systematic computation of similarity among a subset or all secondary features will result in a matrix containing a score of similarity between two identities at specific acquisition time of secondary features, i.e. <qi,qk>, where i and k are temporal references and <.> is an operator to compare secondary features. Obviously, when i=j the comparison scores maximizes the similarity or minimizes the dissimilarity. By this strategy of computing a global and local maximization of likelihood it is possible to obtain most likely segments of trajectories and reliability of all or a subset of segments of trajectory.

As indicated above, different comparison approaches can be used depending on the type of calculated physical feature(s), in particular:
- Anatomical: comparison can be calculated as distance difference in back leg length, hip to shoulder distance and girth. The invention can establish that if all measurements have a difference below 4cm and the sum of all distances have an error below 7cm the identity is the same.
- Body weight: comparison can be calculated as difference between both time points. Depending if time difference is a few minutes, hours, days or weeks some corrective means might be required. If time difference is just a few seconds or minutes, weight difference is expected to be within reasonable error limits. If weight error is beyond expected by system accuracy, the system might decide to wait for another measurement to check if there was a spurious error or it is a reliable measurement. If time difference is just a few hours weight error might be similar to the previous approach, however there are subtle day and night changes in some cases that might be included in another model. If time difference is a few days, a growth model must be used to evaluate whether the animal meets the expected weight. Similarly, this would occur for few weeks. However, if time is very long overall reliability of the system might be lower.
- Body maps: In an embodiment a body map can be defined as a graph with specific 3D positions referenced to one or more body landmarks, like hip and/or shoulder. Then it is possible to compare such regularized body maps in terms of surface, shapes, distances among vertices, other geometrical operations or graph based measures. If time difference is long additional growth models might need to be adapted (depending on regularization means) as explained in body weight.
- Body features: comparison by distance measurement of average body temperature, min/max/standard deviation, kurtosis, and other statistical moments or operations on a body feature like temperature, bioimpedance, pattern of steps, weight, spectral response, fluorescence, etc. Also comparison between distributions like likelihood rations in which normalized histogram distribution is used as an approximation of probability density function. Additional means like Battacharya or Smirnoff coefficients or distances can be also valid means for scoring similarity.
- Body map features: in addition to body features and geometrical operations on body maps based on shapes it is possible to include additional information to vertices, such as local body temperature, presence of tail, local color or local spectral response (as TOF cameras are in infrared range, depending on melanin of animals the spectral response at 800-850nm is different) can be associated to each vertex of body map. Then, similarity measures for each or many vertices can be computed to obtain a score or establish a threshold for agreement. Previous considerations can also apply here, especially for temperature as is markedly different from day and night and also as growth occurs.
- Mapped body features: it is also possible to regularize camera information like temperature, color, infrared, depth or other imaging means into a body map. This will result in a reconstruction of imaged data into a regularized space. Then it is possible to compare point by point throughout the entire animal at two different time points to exploit not only average or distribution approaches but also image processing means to ensure the identity of an animal.
- Image comparison: even though a body map is not used, it is still possible to compare animal identity by image processing means like homography, which enables to compare two images taken from different viewpoints, as it would occur when comparing information obtained at two different time points.
- Combination: a combination of many of the above reported methods can be used by a heuristic method or a trained system by machine learning processes (support vector machines, convolutional neural networks, neural networks, random forests, etc.).

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Non-volatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A method for traceability of living specimens, the method comprising:
a) executing a first process that performs video tracking of a plurality of living specimens, wherein the first process comprises:
a1) continuously acquiring, by a primary system including at least one static camera, video images of the living specimens and transmitting the acquired video images to a processing unit;
a2) detecting, by the processing unit, for each received video image, the living specimens included therein by comparing each received video image with at least one past video image, the latter being stored in a database of video tracking images; and
a3) determining, by the processing unit, for each received video image, tracking features of the detected living specimens by implementing a tracking algorithm on the video image, the tracking features including a digital identifier of each detected living specimen, a time stamp, and at least one of the following features: a position or a contour of the detected living specimens;
b) determining, by the processing unit, a trajectory vector that includes a trajectory followed by each detected living specimen according to its digital identifier, said trajectory vector being determined by accumulating all the tracking features determined in step a3;
c) executing a second process at a certain period of time, wherein the second process comprises:
c1) acquiring, by a secondary system, data of at least one living specimen of said plurality of living specimens, wherein the secondary system is placed at a known position when acquiring said data;
c2) determining, by the secondary system, at least one physical characteristic of said at least one living specimen based on the acquired data; and
c3) determining, by the secondary system, secondary features of the at least one living specimen, said secondary features including the determined at least one physical characteristic, a timestamp and said position;
d) upon reception of at least one determined secondary feature fulfilling a given score, matching, by a processing unit, the time stamps and positions or contours of the tracking features included in said trajectory vector with the timestamp and position of the received secondary feature, a result of said matching providing a reference point of hyperfeatures that links physical characteristics of the at least one living specimen of step c1) with a digital identifier;
e) repeating steps c) and d) for other periods of time and as a result providing other reference points of hyperfeatures that link physical characteristics of the living specimens with a digital identifier;
f) identifying, by a processing unit, when two reference points are contained within the same digital identifier, and as a result providing a potential trajectory segment; and
g) comparing, by a processing unit, the physical characteristics of said potential trajectory segment, wherein:
g1) if a result of said comparison is comprised inside a given range, the potential trajectory segment is established as a valid trajectory segment; or
g2) if a result of said comparison is comprised outside the given range, the potential trajectory segment is established as an invalid trajectory segment.

2. The method of claim 1, wherein step g2) further comprises establishing that additional actions has to be done, said additional actions comprising repeating step c2) for determining other physical characteristics of the living specimens or repeating steps d) - f) to obtain an alternative potential trajectory segment.

3. The method of claim 1, wherein step g2) further comprises executing at least one of the following:
- calculating two time points linked by possible trajectories that initially belonged to different digital identities;
- establishing a likelihood of two potential trajectory segments by comparing additional features of two time points; and/or
- calculating most likely segments of trajectories and reliability of such segment of trajectory by computing a global and local maximization of likelihood.

4. The method of claim 1, wherein the data acquired in step c1) is at least one image of the at least one living specimens.

5. The method of claim 4, wherein step c) further comprises applying a homography algorithm to differentiate two living specimens that are very close together.

6. The method of claim 4, wherein the at least one physical characteristic determined in step c2) is a body map of the at least one living specimen; a body temperature of the at least one living specimen, a body temperature of a given body part of the at least one living specimen, a weight, a spectral response, an electromagnetic response, a colorimetry and/or a texture of the at least one living specimen.

7. The method of claim 1, wherein the at least one physical characteristic determined in step c2) is a weight, a bioimpedance or a pattern of steps of the at least one living specimen.

8. The method of claim 1, further comprising computing health, walking distance, standing time, mood aggressiveness, behavior, welfare and/or longitudinal growth parameters of one or more living specimens using a set of potential trajectory segments, with or without additional data.

9. The method of any of previous claims, wherein the living specimen is an animal including a pig, a cow, a broiler, a chicken or a bull.

10. A system for traceability of living specimens, comprising:
a primary system including at least one static camera;
a secondary system including a data acquisition unit and at least one processing module;
at least one processing unit; and
a database of video tracking images,
wherein the system is configured to implement the method of claim 1.

11. The system of claim 10, wherein the data acquisition unit is an image acquisition unit including at least one camera, wherein the camera comprises a RGB camera with extended NIR in the red channel or a thermal camera.

12. The system of claim 10 or 11, wherein the secondary system further comprises a telemetric unit, wherein the telemetric unit comprises a rotating Lidar, a scanning Lidar, a plurality of Lidars, a time-of-flight, TOF, sensor and/or a TOF camera.

13. The system of claim 10, wherein the secondary system is a scaling system, a floor with piezo electric material to record steps, an instrument to record bioimpedance on a part of the floor, a RFID reader or an antenna to read a wearable chip, or an instrument to record heart rate.

14. The system of claim 10, further comprising one or more additional sensors configured to evaluate air quality, ventilation, temperature, humidity, water intake, feed intake, metabolism of the living specimen, digestion and/or heart rate of the living specimen.

15. A computer program product comprising instructions which, when the program is executed by a computer, cause the computer to carry out a method according to one of the claims 1 to 9.
